# EUROPEAN PATENT APPLICATION

(11) **EP 4 721 545 A1**
(43) Date of publication of application: **08.04.2026**
(21) Application number: 25205899.5
(22) Date of filing: 30.09.2025
(51) Int. Cl.: A01D 34/71

(54) **BOTTOM SIDE CONVEYOR**

(30) Priority: 02.10.2024 US 202463702446 P
(71) Applicant: MTD Products Inc, Valley City, OH 44280-2711 (US)
(72) Inventor: MAGGARD, Jay, Valley City, 44280 (US); SCHAEDLER, Axel, Valley City, 44280 (US)
(74) Representative: Slingsby Partners LLP

(57) **Abstract**

Provided is a bottom side conveyor comprising a housing and a conveyor. The housing has a right side and a left side offset in a width direction; a front and a back offset in a depth direction; a top and a bottom offset in a height direction; a front enclosure adapted to receive a flow of cuttings generated by a mowing operation, and a rear enclosure adapted to receive the flow of cuttings from the front enclosure. The conveyor has a first shaft elongated in the width direction, a second shaft elongated in the width direction, and a first belt loop extending around the first shaft and the second shaft, the first belt loop presenting a first conveyor surface which faces in both the front direction and the top direction.

## Description

### FIELD OF DISCLOSURE

This application relates generally to outdoor power equipment, and more specifically to clipping or debris conveyance employable in connection with outdoor power equipment such as, and without limitation, a lawn mower.

### SUMMARY AND RELATED INFORMATION

Powered maintenance apparatuses come in a variety of forms. One form of powered maintenance apparatus is powered outdoor maintenance equipment such as, and without limitation, a lawn mower.

Lawn mowers sometimes use collection apparatus to collect and bag cuttings produced during mowing operations. Some collection apparatus may include bagging assist systems. There are issues both with and without bagging assist systems. Current bagging assist systems require significant energy to move cuttings from the mow deck to a bag or other container by mechanical throw or by increased airflow or both. By contrast, without a bagging assist system it may be necessary to increase airflow though the collection apparatus, such as, by using blades with high wings, which requires significant energy. In either case, the energy requirements may be problematically large. It remains desirable to develop bagging assist systems that require low energy and still are effective in moving cuttings from a mow deck to a cutting container.

The following presents a simplified summary in order to provide a basic understanding of some example aspects of the disclosure. This summary is not an extensive overview. Moreover, this summary is not intended to identify critical elements of the disclosure nor delineate the scope of the disclosure. The sole purpose of the summary is to present some concepts in simplified form as a prelude to the more detailed description that is presented later.

In various embodiments, the subject disclosure provides a bottom side conveyor that may in some non-limiting aspects be employed with outdoor power equipment such as a lawn mower.

An aspect relates to a bottom side conveyor comprising a housing and a conveyor. In this aspect the housing has a right side and a left side offset in a width direction; a front and a back offset in a depth direction; a top and a bottom offset in a height direction; a front enclosure adapted to receive a flow of cuttings generated by a mowing operation, and a rear enclosure adapted to receive the flow of cuttings from the front enclosure. The latter conveyor has a first shaft elongated in the width direction, a second shaft elongated in the width direction, and a first belt loop extending around the first shaft and the second shaft, the first belt loop presenting a first conveyor surface which faces in both the front direction and the top direction.

Another aspect relates to a bottom side conveyor adapted for use with an associated mower, comprising: a housing, the housing having, a housing right side and a housing left side opposite from the housing right side and offset in a width direction by a housing width, a housing front and a housing back opposite from the housing front and offset in a depth direction by a housing depth, a housing top and a housing bottom opposite from the housing top and offset in a height direction by a housing height, a front enclosure adapted for operational engagement on one side of an associated mow deck of the associated mower, the operational engagement adapted to facilitate a flow of cuttings generated by a mowing operation into the front enclosure, and a rear enclosure adapted to receive the flow of cuttings from the front enclosure; and a conveyor, the conveyor having, a first shaft, the first shaft being elongated in the width direction and adapted to rotate about a first axis extending in the width direction, a second shaft, the second shaft being elongated in the width direction and adapted to rotate about a second axis extending in the width direction, and a first belt loop extending around the first shaft and the second shaft, the first belt loop presenting a first conveyor surface which faces in both the front direction and the top direction.

The bottom side conveyor may further comprise a flinger at least partially enclosed by the rear enclosure, the flinger adapted to rotate about an axis extending in the depth direction.

The second axis may be offset from the first axis in the height direction. The second axis may be offset from the first axis in the depth direction.

The first shaft may be at least partially enclosed by the front enclosure. The second shaft may be at least partially enclosed by the rear enclosure.

The conveyor may further comprise: a third shaft, the third shaft being elongated in the width direction and adapted to rotate about a third axis extending in the width direction; a second belt loop extending around the third shaft, the second belt loop presenting a second conveyor surface which faces in the top direction. The second belt loop may further extend around the first shaft. The second conveyor surface may also face in the rear direction or the front direction.

The first conveyor surface and/or the second conveyor surface may have lumps, lugs, teeth, paddles, fingers, spikes, or other features adapted to facilitate transport of cuttings along the respective conveyor surface.

The flinger may be adapted to eject cuttings in the rear enclosure out of the rear enclosure.

Another aspect relates to a lawn mower comprising a mow deck and a bottom side conveyor engaged with the lawn mower. In this aspect, the latter bottom side conveyor has a housing and a conveyor. The latter housing has a front enclosure adapted to receive a flow of cuttings generated by a mowing operation, and a rear enclosure adapted to receive the flow of cuttings from the front enclosure. The latter conveyor has a first shaft elongated in the width direction, a second shaft elongated in the width direction, and a first belt loop extending around the first shaft and the second shaft, the first belt loop presenting a first conveyor surface which faces in both the front direction and the top direction.

Another aspect relates to a lawn mower comprising: a mow deck, the mow deck having a mow deck right side and a mow deck left side opposite from the mow deck right side and offset in a width direction by a mow deck width, a mow deck front and a mow deck back opposite from the mow deck front and offset in a depth direction by a mow deck depth, a mow deck top and a mow deck bottom opposite from the mow deck top and offset in a height direction by a mow deck height, a blade operable to generate cuttings during a mowing operation, a side discharge aperture at either the mow deck left side or the mow deck right side, and adapted to permit outflow of a flow of the cuttings from the mow deck therethrough; a bottom side conveyor engaged with the lawn mower, the bottom side conveyor having, a housing, the housing having a front enclosure adapted for operational engagement with the side discharge aperture, the operational engagement adapted to facilitate the flow of cuttings generated by a mowing operation into the front enclosure, and a rear enclosure adapted to receive the flow of cuttings from the front enclosure, and a conveyor, the conveyor having, a first shaft, the first shaft being elongated in the width direction and adapted to rotate about a first axis extending in the width direction, a second shaft, the second shaft being elongated in the width direction and adapted to rotate about a second axis extending in the width direction, and a first belt loop extending around the first shaft and the second shaft, the first belt loop presenting a first conveyor surface which faces in both the front direction and the top direction.

The lawn mower may further comprise a flinger at least partially enclosed by the rear enclosure, the flinger adapted to rotate about an axis extending in the depth direction.

The second axis may be offset from the first axis in the height direction. The second axis may be offset from the first axis in the depth direction.

The first shaft may be at least partially enclosed by the front enclosure. The second shaft may be at least partially enclosed by the rear enclosure.

The conveyor may further comprise: a third shaft, the third shaft being elongated in the width direction and adapted to rotate about a third axis extending in the width direction; a second belt loop extending around the third shaft, the second belt loop presenting a second conveyor surface which faces in the top direction. The second belt loop may further extend around the first shaft. The second conveyor surface may also face in the rear direction or the front direction.

The first conveyor surface and/or the second conveyor surface may have lumps, lugs, teeth, paddles, fingers, spikes, or other features adapted to facilitate transport of cuttings along the respective conveyor surface.

The flinger may be adapted to eject cuttings in the rear enclosure out of the rear enclosure. The lawn mower may further comprise a container adapted to receive cuttings ejected from the rear enclosure.

Another aspect relates to a lawn mower comprising: a mow deck, the mow deck having a mow deck right side and a mow deck left side opposite from the mow deck right side and offset in a width direction by a mow deck width, a mow deck front and a mow deck back opposite from the mow deck front and offset in a depth direction by a mow deck depth, a mow deck top and a mow deck bottom opposite from the mow deck top and offset in a height direction by a mow deck height, a blade operable to generate cuttings during a mowing operation, a side discharge aperture at either the mow deck left side or the mow deck right side, and adapted to permit outflow of a flow of the cuttings from the mow deck therethrough; and the bottom side conveyor defined herein engaged with the lawn mower, the front enclosure being adapted for operational engagement with the side discharge aperture, the operational engagement adapted to facilitate the flow of cuttings generated by a mowing operation into the front enclosure.

The flinger may be adapted to eject cuttings in the rear enclosure out of the rear enclosure. The lawn mower may further comprise a container adapted to receive cuttings ejected from the rear enclosure.

Another aspect relates to a method of using the lawn mower as defined herein, comprising: using the mower to conduct a mowing operation; generating a flow of cuttings during the mowing operation; moving the flow of cuttings into the front enclosure; and using the conveyor to move the flow of cuttings from the front enclosure to the rear enclosure.

Another aspect relates to a method of using a lawn mower. In this aspect, the method comprises providing a lawn mower; using the mower to conduct a mowing operation; generating a flow of cuttings during the mowing operation; moving the flow of cuttings into the front enclosure; using the conveyor to move the flow of cuttings from the front enclosure to the rear enclosure. In this aspect the mower has a mow deck, and a bottom side conveyor. The latter mow deck has a blade operable to generate a flow of cuttings during a mowing operation, and a side discharge aperture at either the mow deck left side or the mow deck right side, and adapted to permit outflow of the flow of the cuttings from the mow deck therethrough. The latter bottom side conveyor is engaged with the lawn mower and has a housing and a conveyor. The latter housing has a front enclosure adapted to receive a flow of cuttings generated by a mowing operation, and a rear enclosure adapted to receive the flow of cuttings from the front enclosure. The latter conveyor has a first shaft elongated in the width direction, a second shaft elongated in the width direction, and a first belt loop extending around the first shaft and the second shaft, the first belt loop presenting a first conveyor surface which faces in both the front direction and the top direction.

Another aspect relates to a method of using a lawn mower, comprising: providing a lawn mower having a mow deck, the mow deck having a mow deck right side and a mow deck left side opposite from the mow deck right side and offset in a width direction by a mow deck width, a mow deck front and a mow deck back opposite from the mow deck front and offset in a depth direction by a mow deck depth, a mow deck top and a mow deck bottom opposite from the mow deck top and offset in a height direction by a mow deck height, a blade operable to generate a flow of cuttings during a mowing operation, a side discharge aperture at either the mow deck left side or the mow deck right side, and adapted to permit outflow of the flow of the cuttings from the mow deck therethrough; a bottom side conveyor engaged with the lawn mower, the bottom side conveyor having, a housing, the housing having a front enclosure adapted for operational engagement with the side discharge aperture, the operational engagement adapted to facilitate the flow of cuttings generated by a mowing operation into the front enclosure, and a rear enclosure adapted to receive the flow of cuttings from the front enclosure, and a conveyor, the conveyor having, a first shaft, the first shaft being elongated in the width direction and adapted to rotate about a first axis extending in the width direction, a second shaft, the second shaft being elongated in the width direction and adapted to rotate about a second axis extending in the width direction, and a first belt loop extending around the first shaft and the second shaft, the first belt loop presenting a first conveyor surface which faces in both the front direction and the top direction; using the mower to conduct a mowing operation; generating a flow of cuttings during the mowing operation; moving the flow of cuttings into the front enclosure; using the conveyor to move the flow of cuttings from the front enclosure to the rear enclosure.

The bottom side conveyor may further comprise a flinger at least partially enclosed by the rear enclosure, the flinger adapted to rotate about an axis extending in the depth direction.

The second axis may be offset from the first axis in the height direction. The second axis may be offset from the first axis in the depth direction.

The first shaft may be at least partially enclosed by the front enclosure. The second shaft may be at least partially enclosed by the rear enclosure.

The conveyor may further comprise: a third shaft, the third shaft being elongated in the width direction and adapted to rotate about a third axis extending in the width direction; a second belt loop extending around the third shaft, the second belt loop presenting a second conveyor surface which faces in the top direction. The second belt loop may further extend around the first shaft. The second conveyor surface may also face in the rear direction or the front direction.

The first conveyor surface and/or the second conveyor surface may have lumps, lugs, teeth, paddles, fingers, spikes, or other features adapted to facilitate transport of cuttings along the respective conveyor surface.

Another aspect relates to a lawn mower comprising: a mow deck, the mow deck having a mow deck right side and a mow deck left side opposite from the mow deck right side and offset in a width direction by a mow deck width, a mow deck front and a mow deck back opposite from the mow deck front and offset in a depth direction by a mow deck depth, a mow deck top and a mow deck bottom opposite from the mow deck top and offset in a height direction by a mow deck height, a blade operable to generate cuttings during a mowing operation, a side discharge aperture at either the mow deck left side or the mow deck right side, and adapted to permit outflow of a flow of the cuttings from the mow deck therethrough; a bottom side conveyor engaged with the lawn mower, the bottom side conveyor having a housing, the housing having a front enclosure adapted for operational engagement with the side discharge aperture, the operational engagement adapted to facilitate the flow of cuttings generated by a mowing operation into the front enclosure, and a rear enclosure adapted to receive the flow of cuttings from the front enclosure, and a conveyor, the conveyor having, a first shaft, the first shaft being elongated in the width direction and adapted to rotate about a first axis extending in the width direction, the first shaft being at least partially enclosed by the front enclosure, a second shaft, the second shaft being elongated in the width direction and adapted to rotate about a second axis extending in the width direction, the second shaft being at least partially enclosed by the rear enclosure, wherein the second axis is offset from the first axis in the height direction, wherein the second axis is offset from the first axis in the depth direction, a first belt loop extending around the first shaft and the second shaft, the first belt loop presenting a first conveyor surface which faces in both the front direction and the top direction, a third shaft, the third shaft being elongated in the width direction and adapted to rotate about a third axis extending in the width direction, a second belt loop extending around the third shaft and the first shaft, the second belt loop presenting a second conveyor surface which faces in the top direction, and wherein the first conveyor surface or the second conveyor surface or both has lumps, lugs, teeth, paddles, fingers, spikes, or other features adapted to facilitate transport of cuttings along the conveyor surface; a flinger at least partially enclosed by the rear enclosure, the flinger adapted to rotate about an axis extending in the depth direction, and to eject cuttings in the rear enclosure out of the rear enclosure; and a container adapted to receive cuttings ejected from the rear enclosure.

To accomplish the foregoing and related ends, certain illustrative aspects of the disclosure are described herein in connection with the following description and the drawings. These aspects are indicative, however, of but a few of the various ways in which the principles of the disclosure can be employed and the subject disclosure is intended to include all such aspects and their equivalents. Other advantages and features of the disclosure will become apparent from the following detailed description of the disclosure when considered in conjunction with the drawings.

### BRIEF DESCRIPTION OF THE DRAWINGS

The foregoing and other aspects of the present disclosure will become apparent to those skilled in the art to which the present disclosure relates upon reading the following description with reference to the accompanying drawings, in which:
Figure 1 is an illustration of a first aspect of a lawn mower.
Figure 2 is a block diagram of a first aspect of a mow deck.
Figure 3 is a block diagram of a first aspect of a conveyor housing.
Figure 4 is a side view of a first aspect of a bottom side conveyor.
Figure 4A is a side view of an alternative embodiment of the first aspect of a bottom side conveyor.
Figure 5 is a side view of a second aspect of a bottom side conveyor.
Figure 6 is a close up side view of a first aspect of conveyor belt.
Figure 7 is a close up side view of a second aspect of conveyor belt.

It should be noted that the drawings are diagrammatic and not drawn to scale. Relative dimensions and proportions of parts of the figures may have been shown exaggerated or reduced in size for the sake of clarity and convenience in the drawings. The same reference numbers are generally used to refer to corresponding or similar features in the different embodiments, except where clear from context that same reference numbers refer to disparate features. Accordingly, the drawings and description are to be regarded as illustrative in nature and not as restrictive.

While embodiments of the disclosure pertaining to providing a bottom side conveyor are described herein, it should be understood that the disclosed machines, electronic and computing devices and methods are not so limited and modifications may be made without departing from the scope of the present disclosure. The scope of the systems, methods, and electronic and computing devices for providing and/or controlling a bottom side conveyor are defined by the appended claims, and all devices, processes, and methods that come within the meaning of the claims, either literally or by equivalence, are intended to be embraced therein.

### DETAILED DESCRIPTION

Example embodiments that incorporate one or more aspects of the present disclosure are described and illustrated in the drawings. These illustrated examples are not intended to be a limitation on the present disclosure. For example, one or more aspects of the present disclosure can be utilized in other embodiments and even other types of devices. Moreover, certain terminology is used herein for convenience only and is not to be taken as a limitation on the present disclosure. Still further, in the drawings, the same reference numerals are employed for designating the same elements.

As utilized herein, relative terms or terms of degree such as approximately, substantially or like relative terms such as about, roughly and so forth, are intended to incorporate ranges and variations about a qualified term reasonably encountered by one of ordinary skill in the art in fabricating, compiling or optimizing the embodiments disclosed herein to suit design preferences, where not explicitly specified otherwise. For instance, a relative term can refer to ranges of manufacturing tolerances associated with suitable manufacturing equipment (e.g., injection molding equipment, extrusion equipment, metal stamping equipment, and so forth) for realizing a mechanical structure from a disclosed illustration or description. In some embodiments, depending on context and the capabilities of one of ordinary skill in the art, relative terminology can refer to a variation in a disclosed value or characteristic; e.g., a 0 to five-percent variance or a zero to ten-percent variance from precise mathematically defined value or characteristic, or any suitable value or range there between can define a scope for a disclosed term of degree. As examples, a component can be rotated through a disclosed angle or substantially the disclosed angle, such as the disclosed angle with a variance of 0 to five-percent or 0 to ten-percent; a disclosed mechanical dimension can have a variance of suitable manufacturing tolerances as would be understood by one of ordinary skill in the art, or a variance of a few percent about the disclosed mechanical dimension that would also achieve a stated purpose or function of the disclosed mechanical dimension. These or similar variances can be applicable to other contexts in which a term of degree is utilized herein such as accuracy of measurement of a physical effect (e.g., a motor speed, a wheel angle, etc.) or the like.

The following terms are used throughout the description, the definitions of which are provided herein to assist in understanding various aspects of the subject disclosure.

As used in this application, the terms "outdoor power equipment", "outdoor power equipment machine", "power equipment", "maintenance machine", and "power equipment machine" are used interchangeably and are intended to refer to any of robotic, partially robotic ride-on, manually operated ride-on, walk-behind, autonomous, semi-autonomous (e.g., user-assisted automation), remote control, or multi-function variants of any of the following: powered carts and wheel barrows, motorized or non-motorized trailers, lawn mowers, lawn and garden tractors, cars, trucks, go-karts, scooters, buggies, powered four-wheel riding devices, powered three-wheel riding devices, lawn trimmers, lawn edgers, lawn and leaf blowers or sweepers, hedge trimmers, pruners, loppers, chainsaws, rakes, pole saws, tillers, cultivators, aerators, log splitters, post hole diggers, trenchers, stump grinders, snow throwers (or any other snow or ice cleaning or clearing implements), lawn, wood and leaf shredders and chippers, lawn and/or leaf vacuums, pressure washers, lawn equipment, garden equipment, driveway sprayers and spreaders, and sports field marking equipment.

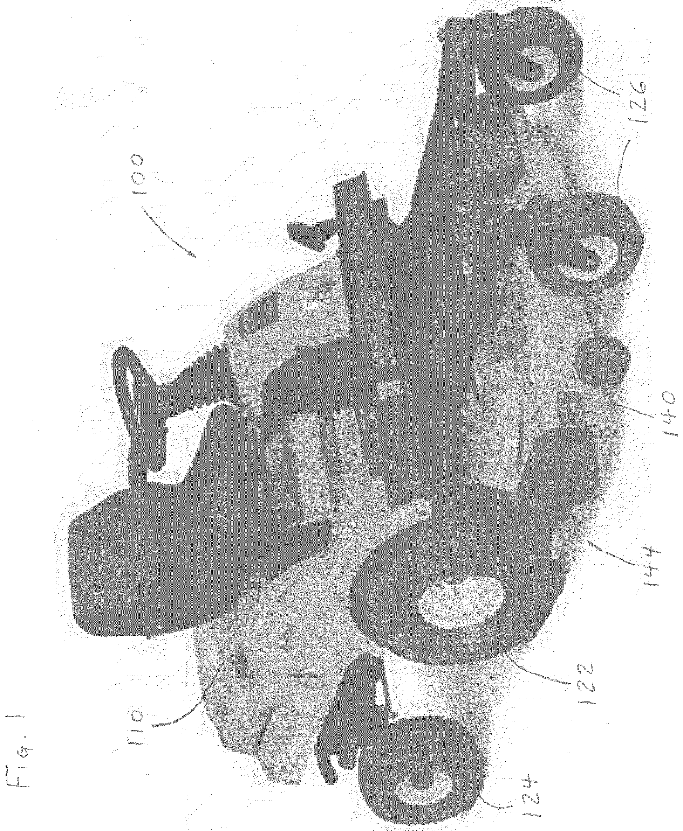

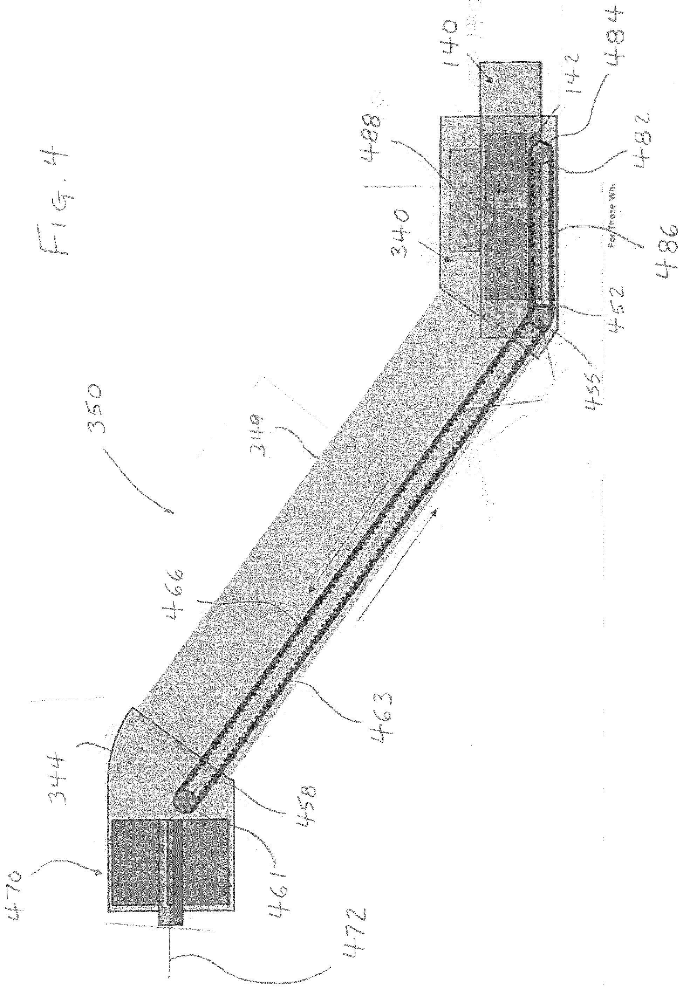

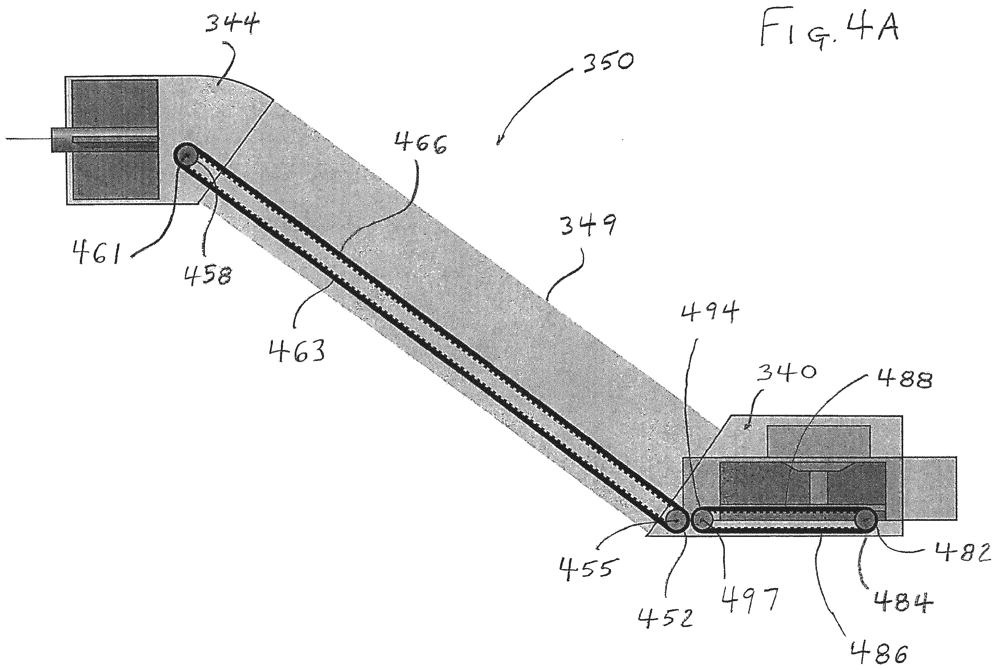

Figure 1 illustrates one non-limiting aspect of a lawn mower 100 that may be associated with a bottom side conveyor. In the aspect shown, the lawn mower may comprise a frame 110, a drive wheel 122, a rear wheel 124, one or more front caster wheels 126, and a mow deck 140. With additional reference to Figure 4, the mow deck 140 may further comprise a blade therein adapted to perform a mowing operation, operable to generate cuttings during a mowing operation, and to generate a flow of cuttings that may flow from the mow deck 140 and out of a discharge aperture 144 of the mow deck 140.

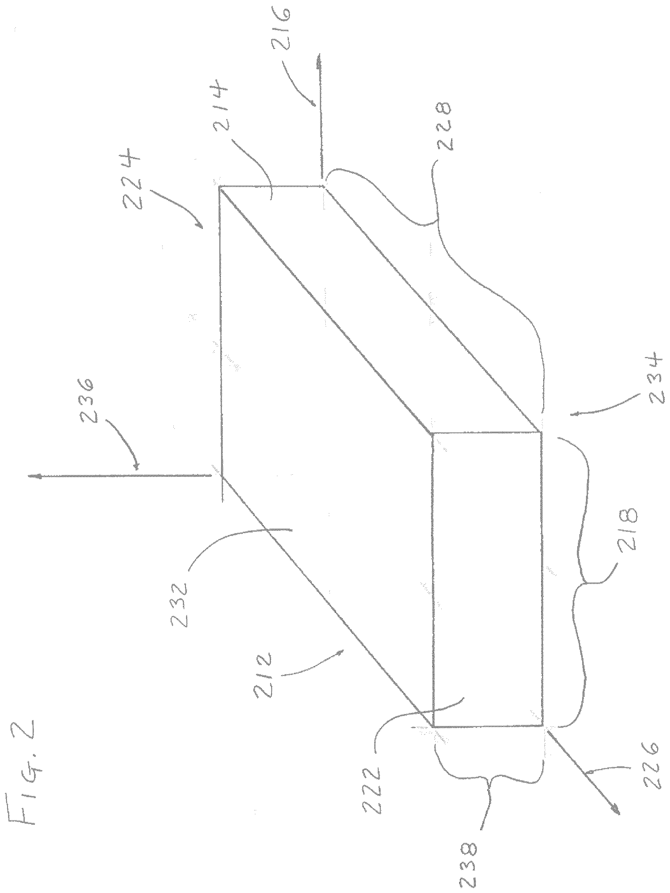

As shown in Figure 2, mow deck 140, shown as a block diagram comprises a mow deck right side 212 and a mow deck left side 214 opposite from the mow deck right side 212 and offset in a width direction 216 by a mow deck width 218. Mow deck 140 further comprises a mow deck front 222 and a mow deck back 224 opposite from the mow deck front 222 and offset in a depth direction 226 by a mow deck depth 228. Mow deck 140 further comprises a mow deck top 232 and a mow deck bottom 234 opposite from the mow deck top 232 and offset in a height direction 236 by a mow deck height 238. With additional reference to Figures 1 and Figure 4, a mow deck 140 may have a discharge aperture 144 adapted to permit outflow of a flow of the cuttings from the mow deck therethrough. While discharge aperture 144 is shown at the mow deck right side 212 side of the mow deck 140 in both Figures 1 and 4, this is not limiting and, in some non-limiting embodiments, a discharge aperture 144 may be located on the mow deck left side 214. Similarly, in some non-limiting embodiments a discharge aperture 144 may be located on the mow deck back 224 or elsewhere as chosen with good engineering judgment. In some embodiments, a mow deck may comprise multiple discharge apertures.

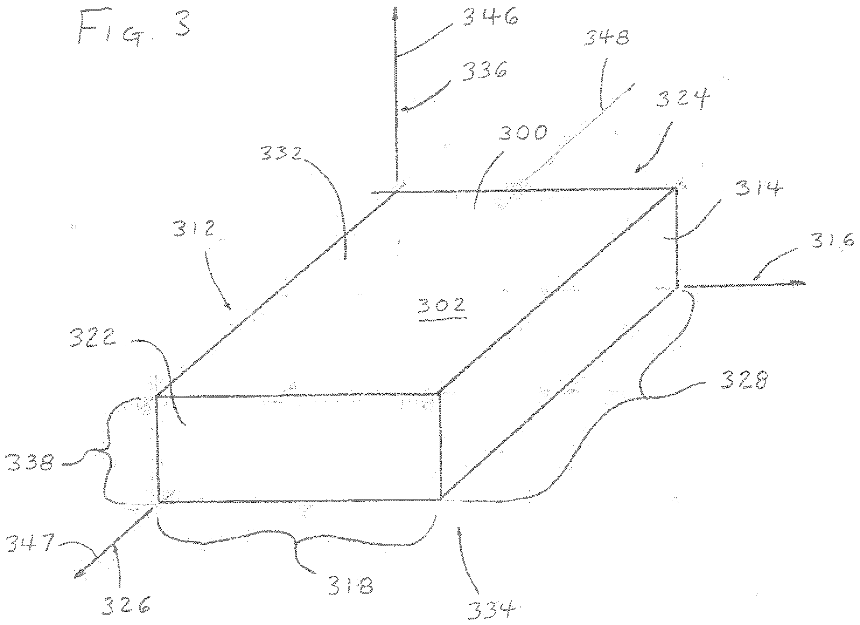

With reference now to Figures 3, 4, 4A, and 5, a bottom side conveyor 300 may be adapted for use with an associated mower such as, and without limitation, the mower shown in Figure 1. The bottom side conveyor 300 may comprise a housing 302 and a conveyor 350. With particular reference now to Figure 3, housing 302 may have a housing right side 312 and a housing left side 314 opposite from the housing right side 312 and offset in a width direction 316 by a housing width 318. Housing 302 may have a housing front 322 and a housing back 324 opposite from the housing front 322 and offset in a depth direction 326 by a housing depth 328. Housing 302 may have a housing top 332 and a housing bottom 334 opposite from the housing top 332 and offset in a height direction 336 by a housing height 338. With continued reference to Figure 3, it should be understood that the house 302 defines a front direction 347 that is defined along the depth direction 326 and extends from the housing back 324 and toward the housing front 322. With continued reference to Figure 3, it should be understood that the house 302 defines a top direction 346 that is defined along the height direction 336 and extends from the housing bottom 334 and toward the housing top 332.

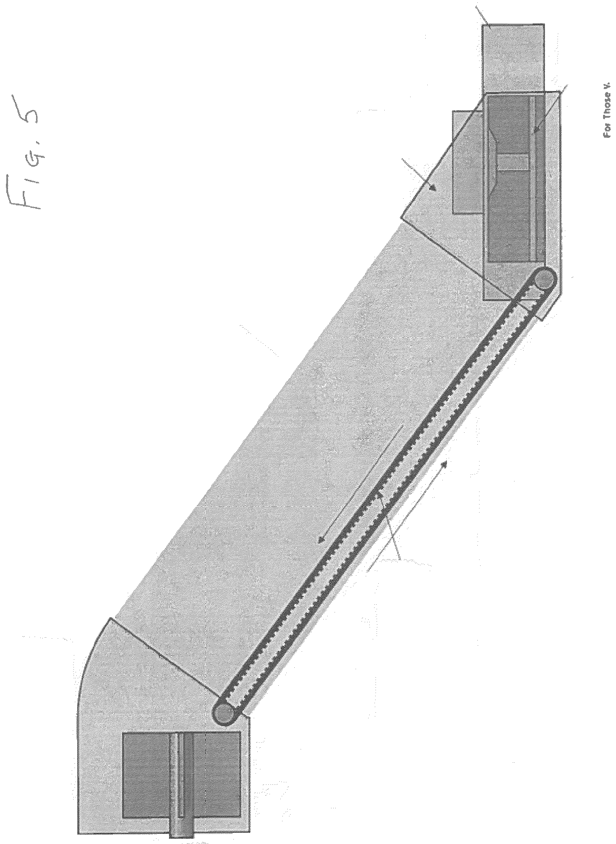

With continued reference to Figures 4, 4A, and 5, housing 302 may have a front enclosure 340 adapted for operational engagement on one side of an associated mow deck of the associated mower. The operational engagement of the front enclosure 340 to the associated mow deck may be adapted to facilitate a flow of cuttings generated by a mowing operation into the front enclosure 340. It should be understood that the associated mow deck of the associated mower may be in some optional embodiments, mow deck 140 of lawn mower 100, but this is not limiting. Housing 302 may have a rear enclosure 344 adapted to receive the flow of cuttings from the front enclosure 340. In some non-limiting embodiments the rear enclosure 344 may be connected directly to the front enclosure 340. In some non-limiting embodiments the rear enclosure 344 may be connected to the front enclosure 340 through one or more intermediate enclosures such as tube 349.

With reference now to Figures 4, 4A, 5, 6, and 7, conveyor 350 may comprise a first shaft 452. The first shaft 452 may be elongated in the width direction 316 and may be adapted to rotate about a first axis 455 extending in the width direction 316 (thus, extending out of the page in Figures 4, 4A, and 5). In some non-limiting embodiments, the first shaft 452 is at least partially enclosed by the front enclosure 340. The conveyor 350 may further comprise a second shaft 458. The second shaft 458 may be elongated in the width direction 316 and may be adapted to rotate about a second axis 461 extending in the width direction 316 (thus, extending out of the page in Figures 4, 4A, and 5). In some non-limiting embodiments, the second shaft 458 is at least partially enclosed by the rear enclosure 344. The conveyor 350 may further comprise a first belt loop 463 extending around the first shaft 452 and the second shaft 458. The first belt loop 463 may define or present a first conveyor surface 466 which faces in both the front direction 347 and the top direction 346. In some non-limiting embodiments, the second axis 461 is offset from the first axis 455 in the height direction 336 and may be higher than the first axis 455. In some non-limiting embodiments, the second axis 461 is offset from the first axis 455 in the depth direction 326 and may be further toward the housing back 324 than the first axis 455. The first belt loop 463 may be driven by either the first shaft 452 or the second shaft 458 such that the first conveyor surface 466 moves material thereon, such as cuttings from the flow of cuttings, from the front enclosure 340 to the rear enclosure 344.

With continued reference to Figures 4 and 4A, in some optional embodiments, the conveyor 350 may further comprise a third shaft 482, the third shaft 482 being elongated in the width direction 316 and adapted to rotate about a third axis 484 extending in the width direction 316 (thus, extending out of the page in Figures 4and 4A). In some non-limiting embodiments, the third shaft 482 is at least partially enclosed by the front enclosure 340. Referring now to Figure 4, in some aspects of the latter embodiments, the conveyor 350 may further comprise a second belt loop 486 extending around the third shaft 482, the second belt loop 486 may present a second conveyor surface 488 which faces in the top direction 346. In some aspects of the latter embodiments, second belt loop 486 further extends around the first shaft 452. In some aspects of the latter embodiments, the second conveyor surface 488 also faces in the front direction 347 or a rear direction 348 opposite the front direction 347. In some aspects of the latter embodiments, the second belt loop 463 may be driven by either the first shaft 452 or the third shaft 482 such that the second conveyor surface 488 moves material thereon, such as cuttings from the flow of cuttings, rearwardly in the front enclosure 340 and toward the first belt loop 463 such that material is moved from the second conveyor surface 488 to the first conveyor surface 466.

Referring now to Figure 4A, in some aspects of the latter embodiments, the conveyor 350 may further comprise a second belt loop 486 extending around the third shaft 482, the second belt loop 486 may present a second conveyor surface 488 which faces in the top direction 346. In some aspects of the latter embodiments, second belt loop 486 further extends around a fourth shaft 494. The fourth shaft 494 may be elongated in the width direction 316 and may be adapted to rotate about a fourth axis 497 extending in the width direction 316 (thus, extending out of the page in Figure 4A). In some non-limiting embodiments, the fourth shaft 494 is at least partially enclosed by the front enclosure 340. In some aspects of the latter embodiments, the second conveyor surface 488 also faces in the front direction 347 or a rear direction 348 opposite the front direction 347. In some aspects of the latter embodiments, the second belt loop 463 may be driven by either the fourth shaft 494 or the third shaft 482 such that the second conveyor surface 488 moves material thereon, such as cuttings from the flow of cuttings, rearwardly in the front enclosure 340 and toward the first belt loop 463 such that material is moved from the second conveyor surface 488 to the first conveyor surface 466. With further reference to the aspect shown in Figure 4A, the first belt loop 463 and the second belt loop 486 may be adapted to operate independently or dependently. In some aspects in which the first belt loop 463 and the second belt loop 486 are adapted to operate independently, either belt may move in speed and direction independent of the motion or speed or direction of the other belt. In some aspects in which the first belt loop 463 and the second belt loop 486 are be adapted to operate dependently they operate in the same direction and the speed of the first belt loop 463 is some constant multiple, k, of the speed of the second belt loop 486. While the constant multiple, k, may be 1.0 this is not required, and k may be in the range of 0.8 to 1.2, or k may be in the range of 0.9 to 1.1.

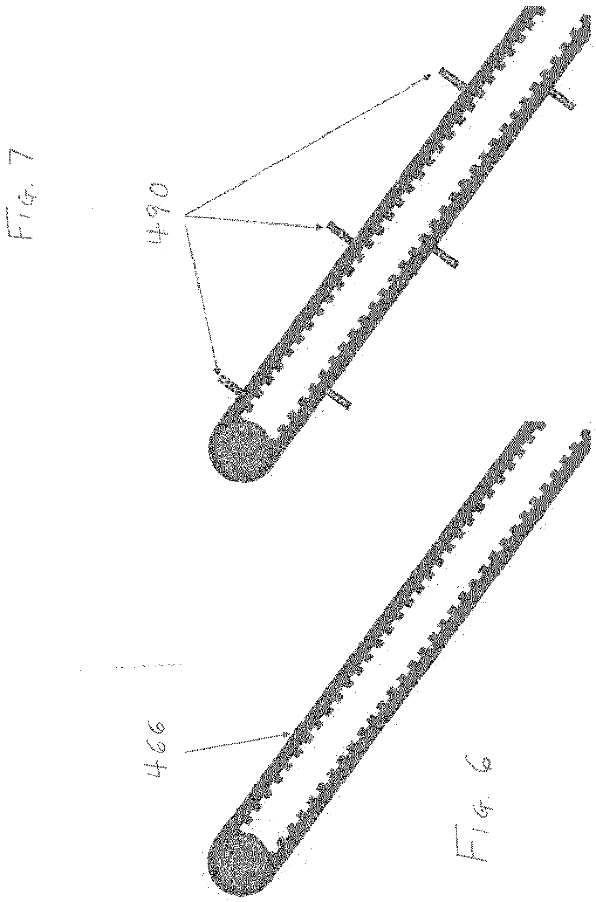

With reference now to Figures 6 and 7, the first conveyor surface 466 and the second conveyor surface 488 may each be either smooth, as shown in Figure 6 or may comprise conveyor features 490 such as, and without limitation, lumps, lugs, teeth, paddles, fingers, spikes, or other features adapted to facilitate transport of cuttings along the conveyor surface.

With reference continued reference to Figures 4 and 5, bottom side conveyor 300 may further comprise a flinger 470. Flinger 470 may comprise an agitator, paddle or other surface adapted to be rotated about flinger axis 472 such that it will fling or knock or project cuttings in the rear enclosure out of the rear enclosure. In some embodiments, the flinger 470 is adapted to be operated to fling or knock or project cuttings in the rear enclosure out of the rear enclosure and into an adjacent or proximate container (not shown). The latter container (not shown) may be a bag, box, canister, hopper or other vessel adapted to accept cuttings and chosen with good engineering judgment. In the embodiments shown in Figures 4 and 5, the flinger axis 472 extends in the depth direction 326, but this is not limiting and in other acceptable embodiments the flinger axis 472 may extend in the height direction 336 or along an axis between the depth direction 326 and the height direction 336 or in some other direction chosen with good engineering judgement such that the resultant rotation of the flinger 470 results in operation to fling or knock or project cuttings in the rear enclosure out of the rear enclosure.

The lawn mower 100 disclosed above may be used in a method of using a lawn mower. This latter method comprises: providing a lawn mower 100 as described above, having a mow deck 140 and a bottom side conveyor 300; using the lawn mower 100 to conduct a mowing operation; generating a flow of cuttings during the mowing operation; moving the flow of cuttings into the front enclosure 340; and using the conveyor 300 to move the flow of cuttings from the front enclosure 340 to the rear enclosure 344. The latter method may optionally comprise rotating a flinger 470 to eject cuttings in the rear enclosure 344 out of the rear enclosure 344 and using a container to receive cuttings ejected from the rear enclosure 344.

In regard to the various functions performed by the above described components, machines, apparatuses, devices, processes, control operations and the like, the terms (including a reference to a "means") used to describe such components, *etc.,* are intended to correspond, unless otherwise indicated, to any component which performs the specified function of the described component (e.g., a functional equivalent), even though not structurally equivalent to the disclosed structure, which performs the function in the herein illustrated exemplary aspects of the embodiments. In this regard, it will also be recognized that the embodiments include a system as well as mechanical structures, mechanical drives, electronic or electro-mechanical drive controllers, and electronic hardware configured to implement the functions, or a computer-readable medium having computer-executable instructions for performing the acts or events of the various processes or control operations described herein.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In other embodiments, combinations or sub-combinations of the above disclosed embodiments can be advantageously made. Moreover, embodiments described in a particular drawing or group of drawings should not be construed as being limited to those illustrations. Rather, any suitable combination or subset of elements from one drawing(s) can be applied to other embodiments in other drawings where suitable to one of ordinary skill in the art to accomplish objectives disclosed herein, objectives known in the art, or objectives and operation reasonably conveyed to one of ordinary skill in the art by way of the context provided in this specification. Where utilized, block diagrams of the disclosed embodiments or flow charts are grouped for ease of understanding. However, it should be understood that combinations of blocks, additions of new blocks, re-arrangement of blocks, and the like are contemplated in alternative embodiments of the present disclosure.

Based on the foregoing it should be understood that the examples and embodiments described herein are for illustrative purposes only and that various modifications or changes in light thereof will be suggested to persons skilled in the art and are to be included within the spirit and purview of this application and scope of the appended claims.

## Claims

1. A bottom side conveyor adapted for use with an associated mower, comprising:
a housing, the housing having,
a housing right side and a housing left side opposite from the housing right side and offset in a width direction by a housing width,
a housing front and a housing back opposite from the housing front and offset in a depth direction by a housing depth,
a housing top and a housing bottom opposite from the housing top and offset in a height direction by a housing height,
a front enclosure adapted for operational engagement on one side of an associated mow deck of the associated mower, the operational engagement adapted to facilitate a flow of cuttings generated by a mowing operation into the front enclosure, and
a rear enclosure adapted to receive the flow of cuttings from the front enclosure; and
a conveyor, the conveyor having,
a first shaft, the first shaft being elongated in the width direction and adapted to rotate about a first axis extending in the width direction,
a second shaft, the second shaft being elongated in the width direction and adapted to rotate about a second axis extending in the width direction, and
a first belt loop extending around the first shaft and the second shaft, the first belt loop presenting a first conveyor surface which faces in both the front direction and the top direction.

2. The bottom side conveyor adapted for use with an associated mower of claim 1, further comprising a flinger at least partially enclosed by the rear enclosure, the flinger adapted to rotate about an axis extending in the depth direction.

3. The bottom side conveyor adapted for use with an associated mower of claim 1 or claim 2, wherein the second axis is offset from the first axis in the height direction.

4. The bottom side conveyor adapted for use with an associated mower of any preceding claim, wherein the second axis is offset from the first axis in the depth direction.

5. The bottom side conveyor adapted for use with an associated mower of any preceding claim, wherein the first shaft is at least partially enclosed by the front enclosure.

6. The bottom side conveyor adapted for use with an associated mower of any preceding claim, wherein the second shaft is at least partially enclosed by the rear enclosure.

7. The bottom side conveyor adapted for use with an associated mower of any of claims 1 to 6, wherein the conveyor further comprises:
a third shaft, the third shaft being elongated in the width direction and adapted to rotate about a third axis extending in the width direction;
a second belt loop extending around the third shaft, the second belt loop presenting a second conveyor surface which faces in the top direction.

8. The bottom side conveyor adapted for use with an associated mower of claim 7, wherein the second belt loop further extends around the first shaft.

9. The bottom side conveyor adapted for use with an associated mower of claim 8, wherein the second conveyor surface also faces in the rear direction or the front direction.

10. The bottom side conveyor of any preceding claim, wherein the first conveyor surface and/or the second conveyor surface has lumps, lugs, teeth, paddles, fingers, spikes, or other features adapted to facilitate transport of cuttings along the respective conveyor surface.

11. The bottom side conveyor of claim 2 or of any of claims 3 to 10 when dependent on claim 2, wherein the flinger is adapted to eject cuttings in the rear enclosure out of the rear enclosure.

12. A lawn mower comprising:
a mow deck, the mow deck having
a mow deck right side and a mow deck left side opposite from the mow deck right side and offset in a width direction by a mow deck width,
a mow deck front and a mow deck back opposite from the mow deck front and offset in a depth direction by a mow deck depth,
a mow deck top and a mow deck bottom opposite from the mow deck top and offset in a height direction by a mow deck height,
a blade operable to generate cuttings during a mowing operation a side discharge aperture at either the mow deck left side or the mow deck right side, and adapted to permit outflow of a flow of the cuttings from the mow deck therethrough; and
the bottom side conveyor of any preceding claim engaged with the lawn mower, the front enclosure being adapted for operational engagement with the side discharge aperture, the operational engagement adapted to facilitate the flow of cuttings generated by a mowing operation into the front enclosure.

13. The lawn mower of claim 12 when directly or indirectly dependent on claim 2, wherein the flinger is adapted to eject cuttings in the rear enclosure out of the rear enclosure; and the lawn mower further comprises a container adapted to receive cuttings ejected from the rear enclosure.

14. A method of using the lawn mower of claim 12 or claim 13, comprising:
using the mower to conduct a mowing operation;
generating a flow of cuttings during the mowing operation;
moving the flow of cuttings into the front enclosure; and
using the conveyor to move the flow of cuttings from the front enclosure to the rear enclosure.
